# EUROPÄISCHE PATENTSCHRIFT

(11) **EP 1 506 940 B1**
(45) Veröffentlichungstag und Bekanntmachung des Hinweises auf die Patenterteilung: **21.12.2011**
(21) Anmeldenummer: 04012835.7
(22) Anmeldetag: 29.05.2004
(51) Int. Cl.: C01F 17/00

(54) **Ceroxidpulver**
Cerium oxide powder
poudre d'oxyde de cerium

(30) Priorität: 13.08.2003 DE 10337199
(43) Veröffentlichungstag der Anmeldung: 16.02.2005
(73) Patentinhaber: Evonik Degussa GmbH, 45128 Essen (DE)
(72) Erfinder: Katusic, Stipan, 65779 Kelkheim (DE); Heberer, Stefan, 63571 Gelnhausen (DE); Krämer, Michael, 61137 Schöneck (DE); Kress, Peter, 63791 Karlstein (DE); Kröll, Michael, Dr., 63796 Kahl (DE); Staab, Edwin, 63826 Geiselbach (DE)

(56) Entgegenhaltungen:
- WO-A-01/36332
- US-A- 5 064 628
- DURAN P ET AL: "Cerium (IV) oxide synthesis and sinterable powders prepared by the polymeric organic complex solution method" JOURNAL OF THE EUROPEAN CERAMIC SOCIETY, ELSEVIER SCIENCE PUBLISHERS, BARKING, ESSEX, GB, Bd. 22, Nr. 9-10, September 2002 (2002-09), Seiten 1711-1721, XP004350849 ISSN: 0955-2219

## Beschreibung

Gegenstand der Erfindung ist ein Ceroxidpulver, dessen Herstellung und Verwendung.

Aufgrund seiner außergewöhnlichen Eigenschaften als Abrasiv und Katalysatormaterial gibt es zahlreiche Patentanmeldungen und Journal-Literatur zur Herstellung von Ceroxidpulvern. Gewöhnlich wird Ceroxid durch Kalzinierung von Cerhydroxiden oder Cercarbonaten hergestellt. Die kalzinierten Oxide werden dann vermahlen und gesiebt. Eine andere Möglichkeit der Synthese von Ceroxid besteht in der Hydrothermalsynthese, wie beispielsweise in US 5389352 beschrieben. Dabei werden Cer(III)-Salze unter Einfluss von Temperatur und Druck oxidativ in Ceroxid überführt, das in Form feiner Partikel auskristallisiert. Von besonderem Interesse sind Spraypyrolyse-Methoden, bei denen ein Ceroxidprecursor, gewöhnlich in der Form eines Aerosols, in einer Flamme oxidiert wird. Eine solche Methode ist beispielsweise in EP-A-1142830 beschrieben.

Pratsinis et al. beschreiben in J. Mater. Res., Vol. 17, Seiten 1356 - 1362 (2002), die Herstellung von Ceroxidpulver hoher Kristallinität durch Flammenspraypyrolyse von Ceracetatlösungen in Lösungsmittelgemischen aus Essigsäure, iso-Octan und 2-Butanol durch Oxidation mittels Sauerstoff in einer Sauerstoff-/Methan-Flamme. Das Lösungsmittelgemisch ist essentiell zur Herstellung eines Ceroxidpulver, welches frei oder weitestgehend frei von gröberen Partikeln ist. Essigsäure allein führt zu Pulvern mit Grobanteil. Besonders vorteilhaft zur Erzielung eines feinteiligen Pulvers, welches frei ist von Grobanteilen, ist eine Erhöhung der Ceroxid-Precursor-Flußrate und eine Verringerung des Sauerstoffflusses. Die mittlere Partikelgröße wird abgeleitet aus dem XRD-Spektrum. Speziell die Zuführung von iso-Octan mit seiner hohen Verbrennungsenthalpie und einer hohen Verdampfungs /Verbrennungsrate soll den Anteil gröberer Partikel reduzieren. Die spezifische Oberfläche der Ceroxidpartikel, die zwischen 101 und 240 m²/g liegen kann, soll durch Variation des Verhältnisses von Ceroxid-Precursor und Sauerstoff verändert werden können. Eine Erhöhung der Precursor-Zuführrate bei konstantem Sauerstofffluss soll zu einer Erhöhung der Partikelgröße, eine Erhöhung des Sauerstoffflusses bei konstanter Precursor-Zuführrate zu einer Verkleinerung der Partikelgröße führen.

Aus dem Dokument geht nur eine mittlere Primärpartikelgröße hervor. Angaben wie diese verteilt sind, werden nicht gegeben. Aus der TEM-Aufnahme auf Seite 1357 ist zu erkennen, dass die Primärpartikel des Feinanteiles zu Aggregaten verwachsen sind, die einen hohen Aggregationsgrad aufweisen. Es ist dem Fachmann bekannt, dass gerade solche Aggregate nur schwierig zu dispergieren sind. Speziell bei Verwendung des Ceroxides als Abrasiv in Dispersionen, kann dies zu Kratzern auf der zu polierenden Oberfläche und zu einem ungleichmäßigen Abtrag führen. Ebenso weisen Dispersionen, die solche Ceroxidpartikel enthalten, oft eine nur geringe Stabilität bezüglich der Sedimentation auf.

Die Porengrößen und deren Verteilung ist ein wichtiges Merkmal bei Einsatz von Ceroxidpulvern in katalytischen Prozessen. Das von Pratsinis et.al hergestellte CeroxidPulver weist eine bimodale Porengrößenverteilung auf, wobei 10% der Poren kleiner 10 nm sind.

Weiterhin erlaubt das beschriebene Verfahren nur die Herstellung kleiner Mengen von Ceroxid (Bereich ca. 10 g/h) und ist damit wenig wirtschaftlich. Möglichkeiten zum upscaling des Verfahrens werden nicht gegeben. Weiterhin führt die Verwendung von Methan und iso-Octan als Brenngas zu einem hohen Anteil an Kohlenstoff im Reaktionsgemisch.

Damit erhöht sich auch die Gefahr, dass Ceroxid mit Kohlenstoff verunreinigt wird.

US 5772780 beansprucht eine Ceroxid enthaltende Dispersion zum Polieren von Halbleitersubstraten, wobei das Ceroxid in Form aggregierter, kristalliner Partikel mit einer Kristallitgröße von nicht mehr als 30 nm vorliegt. Ein Herstellungsverfahren der Ceroxidpartikel und der Ceroxid enthaltenden Dispersion wird nicht offenbart.

US 6420269 beansprucht ein Abrasiv welches ein Ceroxid-Korn enthält, das durch Oxidation eines wasserunlöslichen, dreiwertigen Cersalzes, dispergiert in Wasser, erhalten wird. Das Ceroxid weist eine spezifische Oberfläche zwischen 50 und 500 m²/g und eine Dichte von 0,8-1,3 g/ml auf. Die Größe des Ceroxidprimärkornes beträgt nicht mehr als 10 nm, die Größe des Ceroxidsekundärkornes, welches durch Aggregation aus den Primärkörnern gebildet wird, ist kleiner als 1 µm. Die Sekundärkörner zeigen einen Umfang der frei von Kanten ist und eine Winkel von weniger als 120° aufweist. Das Ceroxidkorn weist im Röntgenpulverdiffraktogramm ein Hauptsignal mit einer Halbwertsbreite, die nicht kleiner ist als 0,4° und nicht größer als 0,5°, auf. Wesentliches Merkmal ist zudem, dass das Material nicht vollständig kristallisiert ist. Dies soll Vorteile beim Polieren von Halbleitersubstraten zeigen.

US 6221118 beansprucht eine Dispersion, welche Ceroxidpartikel geringer Kristallinität enthält, die aus Primärpartikeln mit einem mittleren Durchmesser von 30 bis 250 nm besteht. Die Ceroxidpartikel weisen in der Dispersion einen mittleren Durchmesser von 150 bis 600 nm auf. Die Ceroxidpartikel werden erhalten durch Verbrennung von Cercarbonat.

In der deutschen Patentanmeldung mit dem Aktenzeichen DE 10251029.6 vom 02.11.2002 wird ein pyrogen hergestelltes Ceroxidpulver mit einer spezifischen Oberfläche von 15 bis 200 m²/g beansprucht, welches aus einem Grobanteil aus kristallinen, nicht aggregierten Partikeln mit einem mittleren Durchmesser zwischen 30 und 200 nm und einem Feinanteil in Form von Aggregaten aus feinkristallinen, verwachsenen Primärpartikeln mit einem mittleren Aggregatdurchmesser von 5 bis 50 nm besteht. Es wird hergestellt in dem man mindestens eine Verbindung, welche oxidativ in Ceroxid überführt werden kann, in eine Flamme, welche aus einem wasserstoffhaltigen Brenngas, bevorzugt Wasserstoff, und einem Überschuss an Luft bzw. einem Luft/Sauerstoffgemisch erzeugt wird, einspeist und dort zur Reaktion bringt. Dabei ist die Austrittsgeschwindigkeit der Flüssigkeitströpfchen aus der Zerstäubereinheit in den Reaktionsraum größer als 70 m/s und die Geschwindigkeit des Reaktionsgemisches im Reaktionsraum liegt zwischen 0,5 und 2 m/s. Die Flamme weist einen Sauerstoffüberschuss, ausgedrückt als Lambda-Wert, von mindestens 1,6 auf.

Aus WO 01/36332 ist die Herstellung von Ceroxidpartikeln bekannt. Die Ceroxidpartikel werden in einer Hochtemperatur-Reaktionszone, gewöhnlich einer Flamme, durch Oxidation von Cersalz-Lösungen, die in Form feiner Tröpfchen der Reaktionszone zugeführt werden, hergestellt. Auf diese Weise werden Aggregate erhalten die weitestgehend aus annähernd sphärischen Primärpartikeln bestehen. Wenigstens einige dieser Aggregate weisen eine cenosphärische Struktur mit einer Aggregatgröße von 1 bis 20 µm auf. Daneben kann die Ceroxidzusammensetzung auch aciniforme (traubenförmige) Aggregate mit einem durchschnittlichen Aggregatdurchmesser von weniger als 500 nm enthalten. Bevorzugt ist eine Ceroxidzusammensetzung bei der die cenosphärischen Aggregate überwiegen. Nachteilig an dieser Ceroxidzusammensetzung ist, dass die cenosphärischen Aggregate instabil und bröckelig sind, und daher bei Anwendungen bei denen Energie aufgebracht werden muss, zum Beispiel Scherenergie, während des Einarbeitens in Dispersionen, ungeordnet zerfallen können. Ferner können die nach dem Dispergieren erhaltenen Fragmente zu einer nicht gewünschten, uneinheitlichen, nicht vorherbestimmbaren Partikelgrößenverteilung in der Dispersion führen.

Der Stand der Technik zeigt zum einen das rege Interesse an Ceroxid, zum anderen wird deutlich, dass bereits geringe Veränderungen in der Reaktionsführung zu einem Material mit unterschiedlichen Eigenschaften führen.

Insbesonders ceroxidhaltige Dispersionen spielen eine wichtige Rolle beim Polieren von Halbleitersubstraten (CMP, chemisch-mechanisches Polieren). Mit der fortschreitenden Miniaturisierung von Bauteilen kommt dem Poliervorgang eine zentrale Bedeutung zu.

Aufgabe der Erfindung ist es daher, ein Ceroxidpulver bereitzustellen, welches als Bestandteil einer Dispersion zum Polieren von Halbleitersubstraten geeignet ist. Aufgabe ist es weiterhin ein Verfahren zur Herstellung des Ceroxides bereitzustellen.

Weiterhin ist es Aufgabe der Erfindung eine ceroxidhaltige Dispersion mit hoher Stabilität bereitzustellen. Dabei soll das Ceroxid leicht einarbeitbar sein und eine hohe Stabilität gegenüber der Sedimentation aufweisen. Aufgabe ist ebenso ein Verfahren zur Herstellung dieser Dispersion.

Gegenstand der Erfindung ist ein polykristallines Ceroxidpulver in Form von Aggregaten von Primärpartikeln, welches dadurch gekennzeichnet ist, dass
- es eine spezifische Oberfläche zwischen 70 und 150 m²/g,
- einen mittleren Primärpartikeldurchmesser zwischen 5 und 20 nm und,
- einen mittleren, projizierten Aggregatdurchmesser zwischen 20 und 100 nm aufweist.

Unter polykristallin ist zu verstehen, dass die Primärpartikel kristallin und zu Aggregaten verwachsen sind.

Unter Primärpartikel werden im Sinne der Erfindung Partikel verstanden, die zunächst in der Reaktion gebildet, im weiteren Reaktionsverlauf zu Aggregaten zusammenwachsen. Unter Aggregat im Sinne der Erfindung sind miteinander verwachsene Primärpartikel ähnlicher Struktur und Größe zu verstehen, deren Oberfläche kleiner ist, als die Summe der einzelnen, isolierten Primärpartikel.

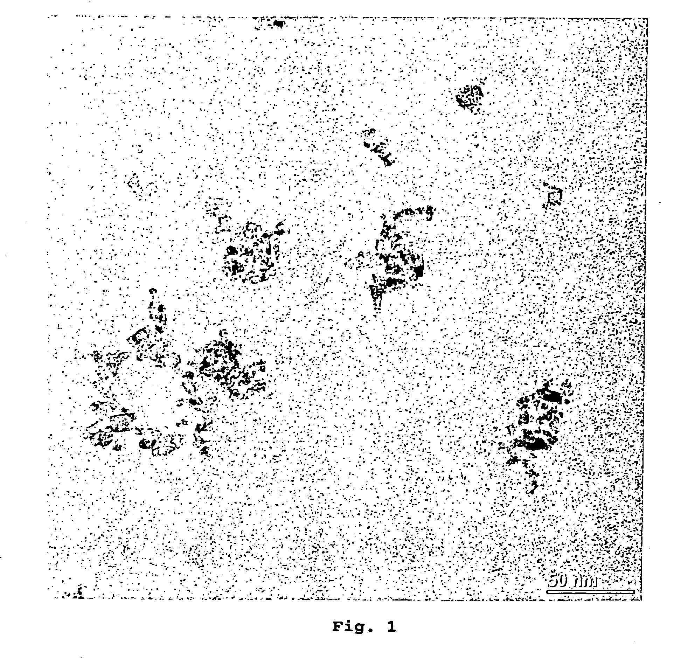

Der mittlere Primärpartikeldurchmesser und der mittlere, projizierte Aggregatdurchmesser (ECD; Equivalent Circle Diameter) werden durch Bildanalyse der TEM-Aufnahmen erhalten. Beide Größen sind im Sinne der Anmeldung als anzahlbezogen definiert. Fig. 1 zeigt eine TEM-Aufnahme eines erfindungsgemäßen Ceroxidpulvers.

Bevorzugt kann ein Pulver mit einer spezifischen Oberfläche zwischen 90 und 120 m²/g sein.

Der mittlere Primärpartikeldurchmesser kann zwischen 8 und 15 nm und der mittlere, projizierte Aggregatdurchmesser zwischen 30 und 70 nm liegen.

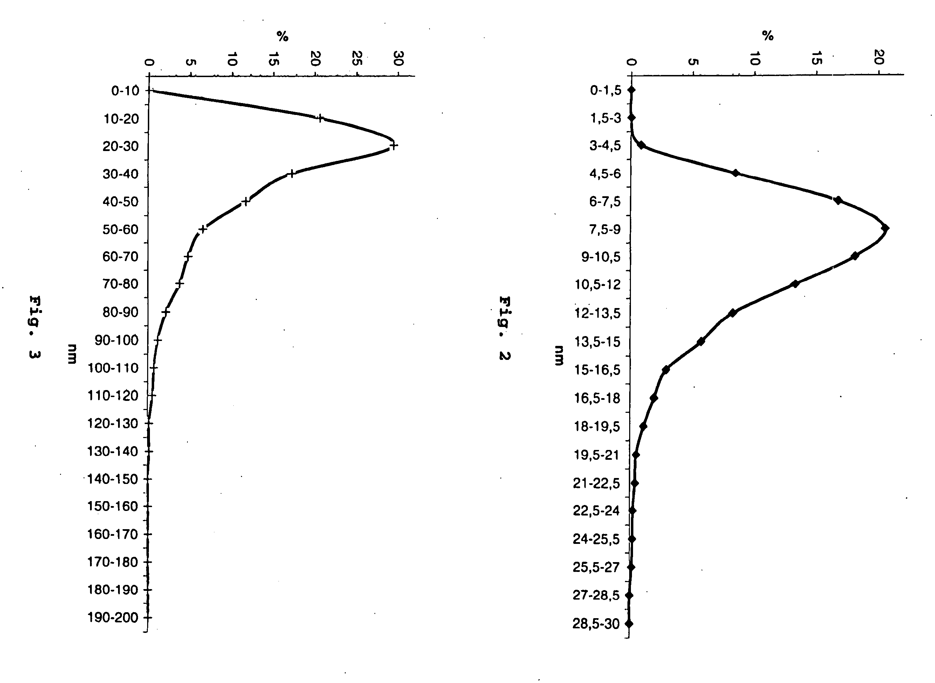

Für eine spätere Verwendung in Dispersionen hat es sich als vorteilhaft gezeigt, dass die Primärpartikeldurchmesser eine enge Verteilung aufweisen. Hierunter ist zu verstehen, dass bei einem Mittelwert m des Durchmessers wenigstens 68% der Partikel im Bereich 0,6 m bis 1,4 m oder 95% der Partikel im Bereich 0,2 m bis 1,8 m liegen. Bei einem mittleren Primärpartikeldurchmesser von 10 nm bedeutet dies, dass wenigstens 68% der Partikel in einem Bereich zwischen 6 und 14 nm, beziehungsweise 95% der Partikel in einem Bereich zwischen 2 und 18 nm liegen. Fig. 2 zeigt eine Verteilung der Primärpartikeldurchmesser eines erfindungsgemäßen Ceroxidpulvers.

Analog ist es vorteilhaft, wenn die Aggregatdurchmesser eine enge Verteilung aufweisen. Hierunter ist zu verstehen, dass bei einem Mittelwert m des projizierten Aggregatdurchmessers wenigstens 68% der projizierten Aggregatdurchmesser im Bereich 0,6 m bis 1,4 m oder 95% der Partikel im Bereich 0,2 m bis 1,8 m liegen. Bei einem mittleren, projizierten Aggregatdurchmesser von 40 nm bedeutet dies, dass wenigstens 68% der Partikel in einem Bereich zwischen 24 und 56 nm, beziehungsweise 95% der Partikel in einem Bereich zwischen 8 und 72 nm liegen. Fig. 3 zeigt eine Verteilung der projizierten Aggregatdurchmesser eines erfindungsgemäßen Ceroxidpulvers.

Bevorzugt könnnen wenigstens 70%, besonders bevorzugt wenigstens 80% der Aggregate des erfindungsgemäßen Ceroxidpulvers eine Fläche von weniger als 1500 nm² aufweisen.

Weiterhin ist bevorzugt, dass wenigstens 85%, besonders bevorzugt wenigstens 90%, der Aggregate des erfindungsgemäßen Ceroxidpulvers eine Fläche von weniger als 4500 nm² aufweisen.

In einer weiteren Ausführungsform kann das erfindungsgemäße Ceroxidpulver auf der Oberfläche eine Zusammensetzung CeOₓ mit x = 1,5 < x < 2 aufweisen, wobei der Bereich 1,7 ≤ x ≤ 1,9 besonders bevorzugt sein kann. Dies bedeutet, dass auf der Oberfläche Bereiche von Cer-III-oxid (Ce₂O₃) und Cer-IV-oxid (CeO₂) vorliegen. Diese Zusammensetzung kann insbesondere im Bereich der Katalyse (Sauerstoffspeicherung, Sauerstoffabgabe) von Bedeutung sein.

Das erfindungsgemäße Ceroxidpulver kann einen Gesamt-Natriumgehalt von weniger als 500 ppm, besonders bevorzugt von weniger als 100 ppm, ganz besonders bevorzugt weniger als 30 ppm, aufweisen. Der Gehalt an Natrium ist für viele Anwendungen, besonders in der Halbleiterindustrie, kritisch.

In einer besonderen Form kann das erfindungsgemäße Ceroxidpulver weniger als 10 ppm an der Oberfläche und an oberflächennahen Schichten der Partikel aufweisen. Dies kann beispielsweise durch großflächige(1 cm²) XPS-Analyse (XPS = Röntgen-Photoelektronen-Spektroskopie) ermittelt werden. Unter oberflächennaher Schicht ist eine Oberfläche zu verstehen, die durch Ionenbeschuss (5 keV Argonionen) erzeugt wird.

Weiterhin kann das erfindungsgemäße Ceroxidpulver einen Kohlenstoffgehalt von weniger als 0,1 Gew.-%, besonders bevorzugt von weniger als 0,05 Gew.-% aufweisen. Kohlenstoffquellen sind hauptsächlich organische Ceroxidprecursor und organische Lösungsmittel.

Das erfindungsgemäße Ceroxidpulver ist frei von Mikroporen mit einem Porendurchmesser von weniger als 2 nm, bestimmt mittels t-Plot nach de Boer. Das Volumen der Mesoporen mit einem Durchmesser zwischen 2 und 50 nm im erfindungsgemäßen Ceroxidpulver kann zwischen 0,40 und 0,60 ml/g, besonders bevorzugt zwischen 0,45 und 0,55 ml/g, liegen.

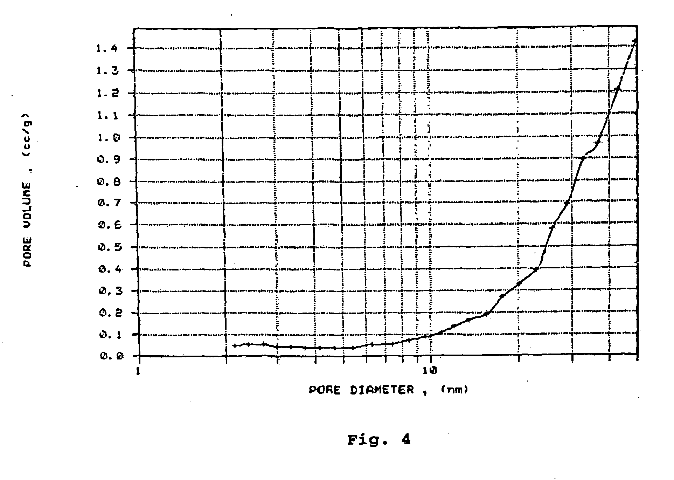

Bevorzugt zeigen die Mesoporen im erfindungsgemäßen Ceroxidpulver eine monomodale Größenverteilung. Dies bedeutet, dass bei der Auftragung des Porenvolumens gegen den Porendurchmesser kein ausgeprägtes Maximum (Punkt ohne Steigung) im Bereich zwischen 2 und 50 nm auftritt. Das Porenvolumen nimmt also mit dem Porendurchmesser stetig zu. Fig. 4 zeigt zum besseren Verständnis diesen Sachverhalt am Beispiel eines erfindungsgemäßen Ceroxidpulvers.

Ein weiterer Gegenstand der Erfindung ist ein Verfahren zur Herstellung des erfindungsgemäßen Ceroxidpulvers, welches dadurch gekennzeichnet ist, dass man ein Aerosol in einer Flamme, welche in einen Reaktionsraum brennt, zur Reaktion bringt, und anschliessend den erhaltenen Feststoff von den gasförmigen Stoffen abtrennt, wobei
- das Aerosol aus einem Zerstäubergas, vorzugsweise Luft, und einer Lösung erzeugt wird, die zwischen 2 und 40 Gew.-% einer Cerverbindung, welche oxidativ in Ceroxid umgewandelt werden kann, enthält,
- die Flamme aus einem wasserstoffhaltigen Brenngas und Primärluft, welche Luft selbst oder ein Luft/Sauerstoffgemisch sein kann, erhalten wird,
- in den Reaktionsraum wenigstens die gleiche Menge an Sekundärluft eingeführt wird, wie Primärluft,
- für lambda gilt, dass 1,1 ≤ lambda ≤ 1,5 ist, wobei sich lambda errechnet aus dem Quotienten der Summe des Sauerstoffanteiles der Primärluft, der Sekundärluft und des Zerstäubergases, falls Sauerstoff enthaltend, dividiert durch die Summe aus der zu oxidierenden Cerverbindung und des wasserstoffhaltigen Brenngases, jeweils in mol/h,
- die Austrittsgeschwindigkeit der Flüssigkeitströpfchen aus der Zerstäubereinheit in den Reaktionsraum größer als 500 m/s ist, und
- die Geschwindigkeit des Reaktionsgemisches im Reaktionsraum größer als 2 m/s ist.

Das erfindungsgemäße Ceroxidpulver wird durch Kombination der genannten Merkmale erhalten. Liegen einzelne Merkmale außerhalb der beanspruchten Grenzen, führt dies zu einem Ceroxidpulver mit einem ungünstigen, großen Aggregatdurchmesser und/oder der Bildung eines Grobanteils. Eine solche Zusammensetzung ist beispielsweise dann, wenn das Ceroxidpulver als Abrasiv in der Halbleiterindustrie eingesetzt werden soll, nicht tolerabel.

Der Anteil der Cerverbindung in der Lösung liegt im erfindungsgemäßen Verfahren zwischen 2 und 40 Gew.-%. Niedrigere Werte sind wirtschaftlich nicht sinnvoll, bei höheren Werten kann es zu Problemen mit der Löslichkeit kommen. Es kann vorteilhaft sein, den Anteil der Cerverbindung in der Lösung zwischen 5 und 25 Gew.-% zu wählen.

Die Art des Lösungsmittels, ob wässerig, organisch oder wässerig-organisch ist nach dem erfindungsgemäßen Verfahren nicht limitiert. Sie ist abhängig von der Löslichkeit der eingesetzten Cerverbindungen. Es kann jedoch vorteilhaft sein, ein organisches Lösungsmittel oder Mischungen von organischen Lösungsmitteln mit Wasser einzusetzen. Beispielsweise können Alkohole wie Ethanol, Propanole oder Butanole oder Carbonsäuren wie Essigsäure, Propionsäure, 2-Ethylhexansäure eingesetzt werden. Halogenhaltige Lösungsmittel können ebenfalls eingesetzt werden, machen jedoch zusätzlich Reinigungsschritte des Produktes notwendig und sind daher weniger vorteilhaft.

Die Art der eingesetzten Cerverbindungen nach dem erfindungsgemäßen Verfahren ist nicht limitiert. Bevorzugt können organische Cerverbindungen eingesetzt werden. Dies können beispielsweise Ceralkoxide wie Cerisopropylat, Ceracetat, Ceracetylacetonat, Ceroxalat, Cer-2-ethylhexanoat und Mischungen der vorgenannten sein. Besonders bevorzugt kann Cer-2-ethylhexanoat eingesetzt werden.

Die Lösung kann mit einem Druck von 1 bis 1000 bar, bevorzugt zwischen 2 und 100 bar, zugeführt werden.

Die Zerstäubung dieser Lösungen kann beispielsweise mittels Ultraschallvernebler oder mindestens einer Mehrstoffdüse durchgeführt werden. Die Mehrstoffdüse kann bei Drücken bis zu 100 bar eingesetzt werden. Bei Verwendung einer Mehrstoffdüse ergibt sich der Vorteil, dass die Tropfen mit einem Gasstrahl erzeugt werden können. Enthält dieser Gasstrahl Sauerstoff, kann eine sehr intensive Vorvermischung des Oxidationsmittels mit der Cerenthaltenden Verbindung erreicht werden. Vorteilhafterweise kann ein Tröpfchenabscheider nachgeschaltet sein.

Ein wesentliches Merkmal des erfindungsgemäßen Verfahrens ist die Einhaltung des Faktors lambda, der nach dem erfindungsgemäßen Verfahren zwischen 1,1 und 1,5 liegt. Außerhalb dieses Bereiches wird kein erfindungsgemäßes Ceroxidpulver erhalten. Bei kleineren lambda-Werten besteht die Gefahr einer unvollständigen Oxidation, bei höheren lambda-Werten resultieren hauptsächlich Pulver, die einen Grobanteil aufweisen. Als vorteilhaft hat sich ein lambda-Wert zwischen 1,2 und 1,5 gezeigt.

Ein Grobanteil wird auch dann erhalten, wenn die Austrittsgeschwindigkeit der Flüssigkeitströpfchen aus der Zerstäubereinheit in den Reaktionsraum und die Geschwindigkeit des Reaktionsgemisches im Reaktionsraum außerhalb der beanspruchten Grenzen liegen.

Unter Grobanteil im Sinne der Erfindung sind Partikel mit einem mittleren Durchmesser von mehr als 100 nm zu verstehen.

Ein weiteres wesentliches Merkmal des erfindungsgemäßen Verfahrens ist die Menge an Sekundärluft, die in den Reaktionsraum eingeleitet wird. Sie muss wenigstens der Menge an Primärluft entsprechen um das erfindungsgemäße Ceroxidpulver zu erhalten. Bei Einspeisung geringerer Mengen an Sekundärluft muss ebenfalls mit einem erhöhten Anteil an Grobanteilen gerechnet werden. Als vorteilhaft hat sich ein Verfahren erwiesen, bei der die doppelte Menge der Primärluft als Sekundärluft eingespeist wird.

Weiterhin kann es von Vorteil sein, wenn im Reaktionsraum ein Restriktor vorgesehen ist. Dieser kann an verschiedenen Stellen im Reaktionsraum positioniert sein. Mit ihm kann der Grad der Vermischung der Reaktionskomponenten und deren Geschwindigkeit intensiviert werden. In der Regel wird eine turbulente Strömung besonders bevorzugt sein.

Das erfindungsgemäße Verfahren kann so ausgeführt werden, dass das Reaktionsgemisch nach Verlassen des Reaktionsraumes auf Temperaturen von 100 bis 200°C abgekühlt wird. Dies kann durch Einbringen von Wasserdampf an einer oder mehreren Stellen in den Reaktionsraum erfolgen.

Die Abtrennung des Feststoffes von gasförmigen Produkten ist im erfindungsgemäßen Verfahren nicht beschränkt. Beispielsweise kann ein Zyklon oder ein Filter eingesetzt werden. Als besonders vorteilhaft hat es sich erwiesen, einen beheizbaren Filter einzusetzen. Die Temperatur dieses Filters kann bevorzugt zwischen 100°C und 200°C liegen.

Die Temperatur im Reaktionsraum, gemessen 0,5 m unterhalb der Flamme, kann bevorzugt zwischen 1000°C und 1400°C, besonders bevorzugt zwischen 1100°C und 1250°C, liegen.

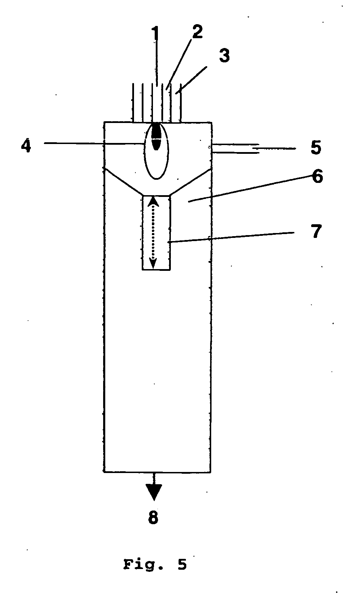

Fig. 5 zeigt schematisch eine Anordnung zur Herstellung der erfindungsgemäßen Ceroxidpulver. Hierbei gilt: 1 = Aerosol enthaltend Ceroxidprecursor; 2 = Primärluft; 3 = Brenngas; 4 = Flamme; 5 = Sekundärluft; 6 = Reaktionsraum; 7 = Restriktor (optional); 8 = Produktaustrag.

Das erfindungsgemäße Ceroxidpulver kann als Poliermittel in der Elektronikindustrie, zur Hitzestabilisierung von Silikonkautschuk, sowie als Katalysator verwendet werden.

Ein weiterer Gegenstand der Erfindung ist eine Dispersion, welche das erfindungsgemäße Ceroxidpulver enthält.

Die erfindungsgemäße Dispersion kann eine flüssige Phase aufweisen, die wässerig, organisch oder wässerig-organisch ist. Bevorzugt kann die flüssige Phase eine wässerige Phase sein.

Die erfindungsgemäße Dispersion weist bevorzugt einen mittleren Aggregatdurchmesser d₅₀ in der Dispersion von weniger als 200 nm, besonders bevorzugt von weniger als 100 nm auf.

Bevorzugt weisen wenigstens 90% der Aggregate in der erfindungsgemäßen Dispersion einen Aggregatdurchmesser zwischen 200 und 300 nm und keine Aggregate mit einem Aggregatdurchmesser von mehr als 500 nm auf.

Der Gehalt an Ceroxidpulver in der erfindungsgemäßen Dispersion ist nicht beschränkt. Bevorzugt liegt er zwischen 2 und 20 Gew.-%, besonders bevorzugt zwischen 5 und 10 Gew.-%. Ein Gehalt kleiner 2 Gew.-% ist anwendungstechnisch und wirtschaftlich nicht sinnvoll. Bei Gehalten von mehr als 20 Gew.-% wird es schwierig die Dispersion über einen vernünftigen Zeitraum stabil gegenüber Sedimentation zu halten.

Die erfindungsgemäße Dispersion kann wenigstens ein Dispergiermittel enthalten. Dies kann zu einer Stabilisierung der Dispersion beitragen.

Geeignete Dispergiermittel können sein: wasserlösliche, organische Polymere, wie (Meth)Acrylsäurepolymere und ihre Ammoniumsalze und Polyvinylalkohole; wasserlösliche, anionische, oberflächenaktive Stoffe wie Ammoniumlaurylsulfat und Polyoxyethylenlaurylether-Ammoniumsulfat; wasserlösliche, nichtionische, oberflächenaktive Stoffe wie Polyoxyethylenlaurylether, Polyethylenglycolmonostearat und/oder wasserlösliche Amine wie Monoethanolamin und Diethanolamin.

Der Anteil des Dispergiermittels in der erfindungsgemäßen Dispersion kann bevorzugt zwischen 0,1 und 50 Gew.-%, bezogen auf das Ceroxidpulver in der Dispersion, liegen. Besonders bevorzugt können Werte zwischen 1 und 10 Gew.-% sein.

Die erfindungsgemäße Dispersion kann bevorzugt alkalisch sein. Besonders bevorzugt kann ein Bereich zwischen pH 8 und 12 sein. Falls eine Veränderung des pH-Wertes zu höheren Werten gewünscht ist, kann dies bevorzugt mit alkalischen Substanzen erfolgen, welche kein Metallion, wie beispielsweise Natrium, tragen. Besonders bevorzugt können Ammoniumhydroxid oder Tetraalkylammoniumhydroxide sein.

Ein weiterer Gegenstand der Erfindung ist ein Verfahren zur Herstellung der erfindungsgemäßen Dispersion, welches dadurch gekennzeichnet ist, dass das erfindungsgemäße Ceroxidpulver in einem flüssigen Medium, bevorzugt wässerig, vordispergiert und anschließend dispergiert wird, wobei gegebenenfalls Dispergiermittel und pH-Wert regulierende Substanzen vor der Vordispergierung im flüssigen Medium vorgelegt werden oder während der Dispergierung zugegeben werden.

Eine andere Möglichkeit besteht darin, während des Dispergiervorganges abwechselnd Ceroxidpulver und Dispergiermittel bzw. pH-Wert regulierende Substanzen in das flüssige Medium zugegeben werden.

Zur Vordispergierung eignen sich zum Beispiel Dissolver, Ultraschallbehandlung oder Zahnradscheibe. Zur Dispergierung eignen sich Rotor-Stator-Maschinen, wie Ultra Turrax (Firma IKA), oder solche der Firma Ystral, ferner Kugelmühlen oder Rührwerkskugelmühlen. Höhere Energieeinträge sind mit einem Planetenkneter/-mixer möglich. Die Wirksamkeit dieses Systems ist mit einer ausreichend hohen Viskosität der bearbeiteten Mischung verbunden, um die benötigten hohen Scherenergien zum Zerteilen der Teilchen einzubringen.

Weiterhin können Hochdruckhomogenisatoren eingesetzt werden. Bei diesen Vorrichtungen werden zwei unter hohem Druck stehende vordispergierte Suspensionsströme über eine Düse entspannt. Beide Dispersionsstrahlen treffen exakt aufeinander und die Teilchen mahlen sich selbst. Bei einer anderen Ausführungsform wird die Vordispersion ebenfalls unter hohen Druck gesetzt, jedoch erfolgt die Kollision der Teilchen gegen gepanzerte Wandbereiche. Die Operation kann beliebig oft wiederholt werden um kleinere Teilchengrößen zu erhalten.

Ein weiterer Gegenstand der Erfindung ist die Verwendung des erfindungsgemäßen Dispersion zum Polieren von oxidischen und metallischen Schichten.

### Beispiele

Die spezifische Oberfläche wird bestimmt nach DIN 66131.

Die TEM-Aufnahmen werden mit einem Hitachi TEM-Gerät, Typ H-75000-2 erhalten. Mittels CCD-Kamera des TEM-Gerätes und anschliessender Bildanalyse werden jeweils ca. 2000 Aggregate bezüglich der Primärpartikel- und Aggregatdurchmesser ausgewertet.

Die Oberflächeneigenschaften, wie Natriumgehalt und Stöchiometrie des Ceroxidpulvers werden durch großflächige(1 cm²) XPS-Analyse (XPS = Röntgen-Photoelektronen-Spektroskopie) ermittelt.

Dabei wird die Stöchiometrie des Ceroxidpulvers an der Oberfläche im Originalzustand anhand der Feinstrukturen der Ce 3d_{5/2} und 3d_{3/2} ermittelt.

Der Natriumgehalt wird sowohl im Originalzustand, wie auch nach 30 minütiger Oberflächenerosion durch Ionenbeschuss (5 keV Argonionen) ermittelt.

Natriumgehalt (nasschemisch): Aufschluss mit H₂SO₄/HF, Bestimmung mittels ICPMS.

Die Porengrößenverteilung wird für Mikroporen (< 2 nm) durch t-Plot n. de Boer, für Mesoporen (2-50 nm) nach dem BJH-Verfahren und für Makroporen (> 50 nm) durch Hg-Intrusion bestimmt.

Die Dispersionen werden hergestellt durch Ultraschallbehandlung; Ultraschallfinger (Bandelin UW2200/DH13G), Stufe 8, 100%; 5 Minuten) in Wasser. Die mittleren Aggregatdurchmesser d₅₀ der Ceroxidpulver werden mit einem Partikelgrößenanalysator LB-500, Fa. Horiba bestimmt.

### Beispiel 1:

1200 g/h einer Lösung von Cer-(III)-2-ethylhexanoat (49 Gew.-%) in 2-Ethylhexansäure (51 Gew.-%) werden mittels Luft (5 m³/h) über eine Düse mit einem Durchmesser von 0,8 mm in einen Reaktionsraum zerstäubt. Hier brennt eine Knallgasflamme aus Wasserstoff (10 m³/h) und Primärluft (10 m³/h), in der das Aerosol zur Reaktion gebracht wird. Zusätzlich werden 20 m³/h Sekundärluft in den Reaktionsraum eingebracht. Im Reaktionsraum ist unterhalb der Flamme ein Restriktor mit einer Länge von 150 mm und einem Durchmesser von 15 mm angebracht, durch den das Reaktionsgemisch geführt wird. Nach Abkühlung wird das Ceroxidpulver an einem Filter von gasförmigen Stoffen abgetrennt.

Die Beispiele 2 bis 9 werden analog Beispiel 1 durchgeführt, wobei die Einsatzmengen und andere Verfahrensparameter der Tabelle 1 zu entnehmen sind. In Beispiel 5 wird kein Restriktor verwendet und Cer-(III)-nitrat wird anstelle von Cer-(III)-2-ethylhexanoat eingesetzt.

Die physikalisch-chemischen Daten der erhaltenen Ceroxidpulver sind der Tabelle 2 zu entnehmen.

Die Bezeichnung der Dispersionen richtet sich nach den jeweiligen Pulvern. Dem Pulver P1 aus Beispiel 1 entspricht Dispersion D1, P2 entspricht D2 usw.

**Tab. 1: Verfahrensparameter bei der Herstellung der Ceroxidpulver Pₙ ausgehend von Ce-(III)- 2-ethylhexanoat**

| | | | **Erfindungsgemäße Beispiele** | | | | **Vergleichsbeispiele** | | | | |
|---|---|---|---|---|---|---|---|---|---|---|---|
| **Beispiel** | | | **1** | **2** | **3** | **4** | **5 ^{c)}** | **6** | **7** | **8** | **9** |
| Cer-Gehalt | | Ges.-% | 12 | 12 | 12 | 10 | 15 | 12 | 12 | 12 | 12 |
| Massenstrom | | g/h | 1200 | 1200 | 1400 | 1200 | 1300 | 1200 | 1200 | 1300 | 1500 |
| **Gasvolumenströme** | | | | | | | | | | | |
| Wasserstoff | | m³/h | 10 | 10 | 10 | 10 | 4,44 | 10 | 7,6 | 8 | 8 |
| Primärluft | | m³/h | 10 | 10 | 10 | 10 | 10 | 30 | 5 | 10 | 10 |
| Sekundärluft | | m³/h | 20 | 20 | 20 | 20 | 20 | 0 | 11 | 25 | 22 |
| Zerstäuberluft | | m³/h | 5 | 5 | 5 | 5 | 4 | 5 | 3 | 5 | 3 |
| Restriktorlänge | | mm | 150 | 150 | 50 | 300 | - | 150 | 150 | 100 | 50 |
| Temperatur | 1^{a)} | °C | 1200 | 1185 | 1220 | 1150 | 751 | 1200 | 1450 | 1006 | 1200 |
| | 2^{b)} | °C | 800 | 820 | 900 | 785 | 623 | 800 | 1080 | 750 | 840 |
| **Lambda** | | | 1,47 | 1,47 | 1,47 | 1,47 | 2,82 | 1,47 | 1,05 | 2,09 | 1,47 |
| **Geschwindigkeit** | | | | | | | | | | | |
| Düsenaustritt | | m/s | 741,36 | 741,36 | 741,36 | 741,36 | 259,46 | 741,36 | 99,99 | 741,36 | 99,99 |
| Reaktionsraum | | m/s | 2,43 | 2,43 | 2,44 | 2,38 | 0,47 | 2,43 | 0,19 | 2,43 | 0,19 |
| **Verweilzeit** Reaktionsraum | | s | 0,8 | 0,8 | 0,8 | 0,7 | 4,2 | 0,8 | n.b. | n.b. | n.b. |

| | | | | | | | | | | | |
|---|---|---|---|---|---|---|---|---|---|---|---|
| a) Temperatur 1 = 0,5 m unterhalb der Flamme, b) Temperatur 2 = Reaktoraustritt c) Cer-(III)-nitrat anstelle von Ce-(III)-2-ethyl-hexanoat; | | | | | | | | | | | |

**Tab. 2: Physikalisch-chemische Daten der Ceroxidpulver**

| | **Erfindungsgemäße Beispiele** | | | | | **Vergleichsbeispiele** | | | | |
|---|---|---|---|---|---|---|---|---|---|---|
| **Pulver** ^{a)} | | **P1** | **P2** | **P3** | **P4** | **P5** | **P6** | **P7** | **P8** | **P9** |
| Feinanteil/Grobanteil | | 100/0 | 100/0 | 100/0 | 100/0 | 26/74 | 81/19 | 70/30 | 77/23 | 60/40 |
| spez. Oberfläche | m²/g | 93 | 104 | 71 | 134 | 19 | 101 | 66 | 101 | 76 |
| Mittlere Durchmesser | | | | | | | | | | |
| Primärpartikel | nm | 10,10 | 9,82 | 12,80 | 6,88 | 40,05 | 10,01 | 28,07 | 12,54 | 25,12 |
| Aggregate | nm | 40,40 | 37,39 | 46,40 | 30,20 | 5,04/87,84 | 10,01/ 106,02 | 8,60/ 93,80 | 10,10/ 87,50 | 8,06/ 90,20 |
| Natrium | ppm | 53 | 58 | 53 | 50 | 49 | 50 | 52 | 48 | 51 |
| Kohlenstoff | Gew.-% | 0,03 | 0,05 | 0,03 | 0,01 | 0,4 | 0,12 | 2,06 | 1,08 | 0,51 |
| Mesoporenvolumen | ml/g | 0,55 | 0,48 | 0,54 | n.b. | 0,05 | n.b. | n.b. | n.b. | n.b. |
| Stampfdichte | g/l | 100 | 87 | 105 | 80 | 1098 | 706 | 560 | 406 | 620 |
| Spezifische Dichte | g/cm³ | 6,69 | 6,18 | 6,58 | n.b. | n.b. | 6,5 | 6,55 | 6,4 | 6,45 |
| pH-Wert^{b)} | | 4,58 | 4,72 | 4,56 | 6,5 | 3,51 | 4,6 | 4,8 | 4,6 | 5 |

| | | | | | | | | | | |
|---|---|---|---|---|---|---|---|---|---|---|
| a) XRD-Phase: kubisch; b)als 4% Lösung; n.b. = nicht bestimmt | | | | | | | | | | |

**Tab.3: Aggregatdurchmesser in Dispersionen^{a)}**

| **Dispersion** | | **D1** | **D2** | **D3** | **D4** |
|---|---|---|---|---|---|
| Mittelwert | nm | 156 | 147 | 114 | 130 |
| 90% kleiner | nm | 237 | 236 | 203 | 205 |
| 95% kleiner | nm | 280 | 277 | 237 | 249 |

| | | | | | |
|---|---|---|---|---|---|
| a) Gehalt Ceroxid: 2 Gew.-% | | | | | |

Die Beispiele zur Herstellung der Ceroxidpulver zeigen, dass nur innerhalb enger Grenzen ein erfindungsgemäßes Pulver, welches frei von Grobanteilen ist, erhalten werden kann. Die erfindungsgemäßen Pulver P1 bis P4 sind frei von Grobanteilen und weisen mittlere Primärpartikeldurchmesser zwischen 6,88 nm und 12,80 nm und mittlere Aggregatdurchmesser zwischen 30,20 nm und 46,40 nm auf.

In Beispiel 5 wird ein nicht erfindungsgemäßes Gemisch aus grob- und feinteiligem Ceroxid erhalten. Der Parameter lambda, die Geschwindigkeit der Aerosoltröpfchen und die Geschwindigkeit im Reaktionsraum liegen ausserhalb der beanspruchten Werte.

Auch in Beispiel 6 wird ein nicht erfindungsgemäßes Ceroxidpulver aus Grob- und Feinanteil gebildet. Obwohl alle Verfahrensparameter mit Ausnahme der Sekundärluft innerhalb der beanspruchten Bereiche liegen, wird kein erfindungsgemäßes Pulver erhalten.

In Beispiel 7 ist der lambda-Wert, sowie die Geschwindigkeit der Aerosoltröpfchen und die Geschwindigkeit des Reaktionsgemisches im Reaktionsraum ausserhalb des beanspruchten Bereiches. In diesem Fall wurden neben einem Grobanteil an Ceroxidpulver auch ein hoher Kohlenstoffanteil gefunden.

In Beispiel 8 führt ein zu hoher lambda-Wert, in Beispiel 9 eine zu grobe Tröpfchenverteilung zu einem nicht erfindungsgemäßen Produkt

Die erfindungsgemäßen Pulver P1 bis P4 weisen an ihrer Oberfläche eine Stöchiometrie CeO_{1,8} auf, bestimmt mittels XPS-Analyse.

Weiterhin wurde festgestellt, dass die erfindungsgemäßen Pulver P1 bis P4 auf ihrer Oberfläche Natriumgehalte von weniger als 10 ppm aufweisen.

Die Figuren 2 und 3 zeigen die enge Verteilung der Durchmesser der Primärpartikel und der projizierten Aggregatdurchmesser am Beispiel von Pulver 2.

Die erfindungsgemäßen Ceroxidpulver lassen sich leicht dispergieren und liefern bei bereits geringem Energieeintrag mittlere Aggregatdurchmesser von weniger als 200 nm.

## Patentansprüche

1. Polykristallines Ceroxidpulver in Form von Aggregaten von Primärpartikeln, **dadurch gekennzeichnet, dass** es
- eine spezifische Oberfläche zwischen 70 und 150 m²/g,
- einen mittleren Primärpartikeldurchmesser zwischen 5 und 20 nm und,
- einen mittleren, projizierten Aggregatdurchmesser zwischen 20 und 100 nm aufweist.

2. Ceroxidpulver nach Anspruch 1, **dadurch gekennzeichnet, dass** die spezifische Oberfläche zwischen 90 und 120 m²/g liegt.

3. Ceroxidpulver nach den Ansprüchen 1 oder 2, **dadurch gekennzeichnet, dass** der mittlere, anzahlbezogene Primärpartikeldurchmesser zwischen 8 und 15 nm beträgt.

4. Ceroxidpulver nach den Ansprüchen 1 bis 3, **dadurch gekennzeichnet, dass** der mittlere, projizierte Aggregatdurchmesser zwischen 30 und 70 nm beträgt.

5. Ceroxidpulver nach den Ansprüchen 1 bis 4, **dadurch gekennzeichnet, dass** wenigstens 68% der Primärpartikeldurchmesser in einem Bereich zwischen 0,6 m und 1,4 m liegen, wobei m der mittlere Primärpartikeldurchmesser ist.

6. Ceroxidpulver nach den Ansprüchen 1 bis 5, **dadurch gekennzeichnet, dass** wenigstens 68% der projizierten Aggregatdurchmesser in einem Bereich zwischen 0,6 m und 1,4 m liegen, wobei m der mittlere projizierte Aggregatdurchmesser ist.

7. Ceroxidpulver nach den Ansprüchen 1 bis 6, **dadurch gekennzeichnet, dass** wenigstens 70% der Aggregate eine Fläche von weniger als 1500 nm² aufweisen.

8. Ceroxidpulver nach den Ansprüchen 1 bis 7, **dadurch gekennzeichnet, dass** wenigstens 85% der Aggregate eine Fläche von weniger als 4500 n m² aufweisen.

9. Ceroxidpulver nach den Ansprüchen 1 bis 8, **dadurch gekennzeichnet, dass** es eine Zusammensetzung CeOₓ auf der Oberfläche von 1,5 < x < 2 aufweist.

10. Ceroxidpulver nach den Ansprüchen 1 bis 9, **dadurch gekennzeichnet, dass** es einen Gesamt-Natriumgehalt von weniger als 500 ppm aufweist.

11. Ceroxidpulver nach Anspruch 10, **dadurch gekennzeichnet, dass** der Natriumgehalt an der Oberfläche kleiner als 10 ppm ist.

12. Ceroxidpulver nach den Ansprüchen 1 bis 11, **dadurch gekennzeichnet, dass** es einen Kohlenstoffgehalt von weniger als 0,1 Gew.-% aufweist.

13. Ceroxidpulver nach den Ansprüchen 1 bis 12, **dadurch gekennzeichnet, dass** es ein Mesoporenvolumen von 0,4 bis 0,6 ml/g aufweist.

14. Ceroxidpulver nach den Ansprüchen 1 bis 13, **dadurch gekennzeichnet, dass** es eine monomodale Mesoporengrößenverteilung aufweist.

15. Verfahren zur Herstellung des Ceroxidpulvers nach den Ansprüchen 1 bis 14, **dadurch gekennzeichnet, dass** man ein Aerosol in einer Flamme, welche in einen Reaktionsraum brennt, zur Reaktion bringt, anschliessend den erhaltenen Feststoff von den gasförmigen Stoffen abtrennt, wobei
- das Aerosol aus einem Zerstäubergas, vorzugsweise Luft, und einer Lösung erzeugt wird, die zwischen 2 und 40 Gew.-% einer Cerverbindung, welche oxidativ in Ceroxid umgewandelt werden kann, enthält,
- die Flamme aus einem wasserstoffhaltigen Brenngas und Primärluft, welche Luft selbst oder ein Luft/Sauerstoffgemisch sein kann, erhalten wird,
- in den Reaktionsraum wenigstens die gleiche Menge an Sekundärluft eingeführt wird, wie Primärluft,
- für lambda gilt, dass 1,1 ≤ lambda ≤ 1,5 ist, wobei sich lambda errechnet aus dem Quotienten der Summe des Sauerstoffanteiles der Primärluft, der Sekundärluft und des Zerstäubergases, falls Sauerstoff enthaltend, dividiert durch die Summe aus der zu oxidierenden Cerverbindung und des wasserstoffhaltigen Brenngases, jeweils in mol/h,
- die Austrittsgeschwindigkeit der Flüssigkeitströpfchen aus der Zerstäubereinheit in den Reaktionsraum größer als 500 m/s ist, und
- die Geschwindigkeit des Reaktionsgemisches im Reaktionsraum größer als 2 m/s ist.

16. Verfahren nach Anspruch 15, **dadurch gekennzeichnet, dass** die Lösung zwischen 5 und 25 Gew.-% einer Cerverbindung enthält.

17. Verfahren nach den Ansprüchen 15 oder 16, **dadurch gekennzeichnet, dass** die Lösung aus welcher das Aerosol erhalten wird, organisch ist.

18. Verfahren nach den Ansprüchen 15 bis 17, **dadurch gekennzeichnet, dass** die Cerverbindung eine organische ist.

19. Verfahren nach den Ansprüchen 15 bis 18, **dadurch gekennzeichnet, dass** das Aerosol durch eine Ultraschallvernebelung oder mindestens eine Mehrstoffdüse erzeugt wird.

20. Verfahren nach den Ansprüchen 15 bis 19, **dadurch gekennzeichnet, dass** der lambda-Wert zwischen 1,2 und 1,5 liegt.

21. Verfahren nach den Ansprüchen 15 bis 20, **dadurch gekennzeichnet, dass** die Menge an Sekundärluft doppelt so hoch ist wie an Primärluft.

22. Verfahren nach den Ansprüchen 15 bis 21, **dadurch gekennzeichnet, dass** im Reaktionsraum ein Restriktor angebracht ist.

23. Verfahren nach den Ansprüchen 15 bis 22, **dadurch gekennzeichnet, dass** das Reaktionsgemisch nach Verlassen des Reaktionsraumes auf Temperaturen von 100 bis 200°C abgekühlt wird.

24. Verfahren nach den Ansprüchen 15 bis 23, **dadurch gekennzeichnet, dass** die Abtrennung des Feststoffes an Filtern bei Temperaturen zwischen 100 und 200 °C stattfindet.

25. Verfahren nach den Ansprüchen 15 bis 24, **dadurch gekennzeichnet, dass** die Temperatur im Reaktionsraum, gemessen 0,5 m unterhalb der Flamme, zwischen 1000°C und 1400°C liegt.

26. Verwendung des pyrogen hergestellten Ceroxides gemäß der Ansprüche 1 bis 14 als Poliermittel in der Elektronikindustrie, zur Hitzestabilisierung von Silikonkautschuk und als Katalysator.

27. Dispersion enthaltend das Ceroxidpulver nach den Ansprüchen 1 bis 14.

28. Dispersion nach Anspruch 27, **dadurch gekennzeichnet, dass** das Ceroxidpulver einen mittleren Aggregatdurchmesser d₅₀ in der Dispersion von weniger als 200 nm aufweist.

29. Dispersion nach den Ansprüchen 27 oder 28, **dadurch gekennzeichnet, dass** wenigstens 90% der Aggregate in der Dispersion einen Aggregatdurchmesser zwischen 200 und 300 nm aufweisen.

30. Dispersion nach den Ansprüchen 27 bis 29, **dadurch gekennzeichnet, dass** keine Aggregate in der Dispersion einen Aggregatdurchmesser von mehr als 500 nm aufweisen.

31. Dispersion nach den Ansprüchen 27 bis 30, **dadurch gekennzeichnet, dass** der Gehalt an Ceroxid zwischen 2 und 20 Gew.-% liegt.

32. Dispersion nach den Ansprüchen 27 bis 31, **dadurch gekennzeichnet, dass** sie wenigstens ein Dispergiermittel enthält.

33. Dispersion nach Anspruch 32, **dadurch gekennzeichnet**, das Dispergiermittel die Gruppe der wasserlöslichen organische Polymere, der wasserlöslichen, anionischen oberflächenaktive Stoffe, der wasserlöslichen, nichtionischen, oberflächenaktiven Stoffe und/oder der wasserlöslichen Amine umfasst.

34. Dispersion nach den Ansprüchen 27 bis 33, **dadurch gekennzeichnet, dass** der Anteil an Dispergiermittel zwischen 0,1 und 50 Gew.-%, bezogen auf Ceroxid, liegt.

35. Dispersion nach den Ansprüchen 27 bis 34, **dadurch gekennzeichnet, dass** sie einen alkalischen pH-Wert aufweist.

36. Verfahren zur Herstellung der Dispersion gemäß der Ansprüche 27 bis 35, **dadurch gekennzeichnet, dass** das Ceroxidpulver in einem flüssigen Medium, bevorzugt wässerig, vordispergiert und anschließend dispergiert wird, wobei gegebenenfalls Dispergiermittel und pH-Wert regulierende Substanzen vor der Vordispergierung im flüssigen Medium vorgelegt werden oder während der Dispergierung zugegeben werden.

37. Verwendung der Dispersion gemäß den Ansprüchen 27 bis 35 zum Polieren von oxidischen und metallischen Schichten.

## Claims

1. Polycrystalline cerium oxide powder in the form of aggregates of primary particles, **characterized in that** it has
- a specific surface area in the range from 70 to 150 m²/g,
- an average primary particle diameter in the range from 5 to 20 nm and
- an average, projected aggregate diameter in the range from 20 to 100 nm.

2. Cerium oxide powder according to Claim 1, **characterized in that** the specific surface area is in the range from 90 to 120 m²/g.

3. Cerium oxide powder according to Claim 1 or 2, **characterized in that** the number average primary particle diameter is in the range from 8 to 15 nm.

4. Cerium oxide powder according to any of Claims 1 to 3, **characterized in that** the average, projected aggregate diameter is in the range from 30 to 70 nm.

5. Cerium oxide powder according to any of Claims 1 to 4, **characterized in that** at least 68% of the primary particle diameters are in the range from 0.6 m to 1.4 m, where m is the average primary particle diameter.

6. Cerium oxide powder according to any of Claims 1 to 5, **characterized in that** at least 68% of the projected aggregate diameters are in the range from 0.6 m to 1.4 m, where m is the average projected aggregate diameter.

7. Cerium oxide powder according to any of Claims 1 to 6, **characterized in that** at least 70% of the aggregates have an area of less than 1500 nm².

8. Cerium oxide powder according to any of Claims 1 to 7, **characterized in that** at least 85% of the aggregates have an area of less than 4500 nm².

9. Cerium oxide powder according to any of Claims 1 to 8, **characterized in that** it has a composition CeOₓ on the surface in which 1.5 < x < 2.

10. Cerium oxide powder according to any of Claims 1 to 9, **characterized in that** it has a total sodium content of less than 500 ppm.

11. Cerium oxide powder according Claim 10, **characterized in that** the sodium content on the surface is less than 10 ppm.

12. Cerium oxide powder according to any of Claims 1 to 11, **characterized in that** it has a carbon content of less than 0.1% by weight.

13. Cerium oxide powder according to any of Claims 1 to 12, **characterized in that** it has a mesopore volume of from 0.4 to 0.6 ml/g.

14. Cerium oxide powder according to any of Claims 1 to 13, **characterized in that** it has a monomodal mesopore size distribution.

15. Process for preparing the cerium oxide powder according to any of Claims 1 to 14, **characterized in that** an aerosol is reacted in a flame which burns in a reaction space, the solid obtained is subsequently separated off from the gaseous materials, where
- the aerosol is produced from an atomization gas, preferably air, and a solution which contains from 2 to 40% by weight of a cerium compound which can be converted by oxidation into cerium oxide,
- the flame is obtained from a hydrogen-containing fuel gas and primary air which can be air itself or an air/oxygen mixture,
- at least the same amount of secondary air as primary air is introduced into the reaction space,
- lambda obeys the inequality 1.1 ≤ lambda ≤ 1.5, where lambda is given by the sum of the oxygen content of the primary air, of the secondary air and of the atomization gas, if the latter contains oxygen, divided by the sum of the cerium compound to be oxidized and the oxygen-containing fuel gas, in each case in mol/h,
- the exit velocity of the liquid droplets from the atomizer unit in the reaction space is greater than 500 m/s and
- the velocity of the reaction mixture in the reaction space is greater than 2 m/s.

16. Process according to Claim 15, **characterized in that** the solution contains from 5 to 25% by weight of a cerium compound.

17. Process according to Claim 15 or 16, **characterized in that** the solution from which the aerosol is obtained is organic.

18. Process according to any of Claims 15 to 17, **characterized in that** the cerium compound is an organic cerium compound.

19. Process according to any of Claims 15 to 18, **characterized in that** the aerosol is produced by means of ultrasonic atomization or at least one multifluid nozzle.

20. Process according to any of Claims 15 to 19, **characterized in that** the lambda value is in the range from 1.2 to 1.5.

21. Process according to any of Claims 15 to 20, **characterized in that** the amount of secondary air is twice that of primary air.

22. Process according to any of Claims 15 to 21, **characterized in that** a restrictor is located in the reaction space.

23. Process according to any of Claims 15 to 22, **characterized in that** the reaction mixture is cooled to temperatures of from 100 to 200°C after leaving the reaction space.

24. Process according to any of Claims 15 to 23, **characterized in that** the solid is separated off on filters at temperatures in the range from 100 to 200°C.

25. Process according to any of Claims 15 to 24, **characterized in that** the temperature in the reaction space, measured 0.5 m beneath the flame, is in the range from 1000°C to 1400°C.

26. Use of the pyrogenically produced cerium oxide according to any of Claims 1 to 14 as polishing agent in the electronics industry, for heat stabilization of silicone rubber and as catalyst.

27. Dispersion containing the cerium oxide powder according to any of Claims 1 to 14.

28. Dispersion according to Claim 27, **characterized in that** the cerium oxide powder has an average aggregate diameter d₅₀ in the dispersion of less than 200 nm.

29. Dispersion according to Claim 27 or 28, **characterized in that** at least 90% of the aggregates in the dispersion have an aggregate diameter in the range from 200 to 300 nm.

30. Dispersion according to any of Claims 27 to 29, **characterized in that** no aggregates in the dispersion have an aggregate diameter of more than 500 nm.

31. Dispersion according to any of Claims 27 to 30, **characterized in that** the content of cerium oxide is in the range from 2 to 20% by weight.

32. Dispersion according to any of Claims 27 to 31, **characterized in that** it contains at least one dispersant.

33. Dispersion according to Claim 32, **characterized in that** the dispersant encompasses the group of water-soluble organic polymers, water-soluble, anionic surface-active substances, water-soluble, nonionic, surface-active substances and/or water-soluble amines.

34. Dispersion according to any of Claims 27 to 33, **characterized in that** the proportion of dispersant is in the range from 0.1 to 50% by weight, based on cerium oxide.

35. Dispersion according to any of Claims 27 to 34, **characterized in that** it has an alkaline pH.

36. Process for producing the dispersion according to any of Claims 27 to 35, **characterized in that** the cerium oxide powder is predispersed and subsequently dispersed in a liquid medium, preferably aqueous, where dispersant and pH-regulating substances are optionally initially introduced into the liquid medium before predispersion or are added during dispersion.

37. Use of the dispersion according to any of Claims 27 to 35 for polishing oxidic and metallic layers.

## Revendications

1. Poudre polycristalline d'oxyde de cérium sous forme d'agrégats de particules primaires, **caractérisée en ce qu'**elle présente
- une surface spécifique entre 70 et 150 m²/g,
- un diamètre moyen des particules primaires entre 5 et 20 nm et
- un diamètre moyen projeté des agrégats entre 20 et 100 nm.

2. Poudre d'oxyde de cérium selon la revendication 1, **caractérisée en ce que** la surface spécifique est comprise entre 90 et 120 m²/g.

3. Poudre d'oxyde de cérium selon les revendications 1 ou 2, **caractérisée en ce que** le diamètre moyen des particules primaires, par rapport au nombre, vaut entre 8 et 15 nm.

4. Poudre d'oxyde de cérium selon les revendications 1 à 3, **caractérisée en ce que** le diamètre moyen projeté des agrégats vaut entre 30 et 70 nm.

5. Poudre d'oxyde de cérium selon les revendications 1 à 4, **caractérisée en ce qu'**au moins 68% des diamètres des particules primaires se situent dans une plage entre 0,6 m et 1,4 m, m représentant le diamètre moyen des particules primaires.

6. Poudre d'oxyde de cérium selon les revendications 1 à 5, **caractérisée en ce qu'**au moins 68% des diamètres projetés des agrégats se situent dans une plage entre 0,6 m et 1,4 m, m représentant le diamètre moyen projeté des agrégats.

7. Poudre d'oxyde de cérium selon les revendications 1 à 6, **caractérisée en ce qu'**au moins 70% des agrégats présentent une surface inférieure à 1500 nm²_{.}

8. Poudre d'oxyde de cérium selon les revendications 1 à 7, **caractérisée en ce qu'**au moins 85% des agrégats présentent une surface inférieure à 4500 nm².

9. Poudre d'oxyde de cérium selon les revendications 1 à 8, **caractérisée en ce qu'**elle présente une composition CeOₓ à la surface de 1,5 < x < 2.

10. Poudre d'oxyde de cérium selon les revendications 1 à 9, **caractérisée en ce qu'**elle présente une teneur totale en sodium inférieure à 500 ppm.

11. Poudre d'oxyde de cérium selon la revendication 10, **caractérisée en ce que** la teneur en sodium à la surface est inférieure à 10 ppm.

12. Poudre d'oxyde de cérium selon les revendications 1 à 11, **caractérisée en ce qu'**elle présente une teneur en carbone inférieure à 0,1% en poids.

13. Poudre d'oxyde de cérium selon les revendications 1 à 12, **caractérisée en ce qu'**elle présente un volume de mésopores de 0,4 à 0,6 ml/g.

14. Poudre d'oxyde de cérium selon les revendications 1 à 13, **caractérisée en ce qu'**elle présente une répartition monomodale des tailles des mésopores.

15. Procédé pour la préparation de la poudre d'oxyde de cérium selon les revendications 1 à 14, **caractérisé en ce qu'**on fait réagir un aérosol dans une flamme qui brûle dans une chambre de réaction, puis on sépare le solide obtenu des substances gazeuses où
- l'aérosol est généré à partir d'un gaz de vaporisation, de préférence de l'air, et d'une solution qui contient entre 2 et 40% en poids d'un composé du cérium qui peut être transformé par oxydation en oxyde de cérium,
- la flamme est obtenue à partir d'un gaz combustible contenant de l'hydrogène et d'air primaire, qui peut être de l'air en soi ou un mélange air/oxygène,
- au moins la quantité d'air secondaire identique à celle de l'air primaire est introduite dans la chambre de réaction,
- pour lambda, il est d'application que 1,1 ≤ lambda ≤ 1,5, où lambda est calculé à partir du quotient de la somme de la proportion d'oxygène de l'air primaire, de l'air secondaire et du gaz de vaporisation, s'il contient de l'oxygène, divisée par la somme du composé de cérium à oxyder et du gaz combustible contenant de l'hydrogène, à chaque fois en mole/h,
- la vitesse de sortie des gouttes de liquide de l'unité de vaporisation dans la chambre de réaction est supérieure à 500 m/s, et
- la vitesse du mélange réactionnel dans la chambre de réaction est supérieure à 2 m/s.

16. Procédé selon la revendication 15, **caractérisé en ce que** la solution contient entre 5 et 25% en poids d'un composé du cérium.

17. Procédé selon les revendications 15 ou 16, **caractérisé en ce que** la solution à partir de laquelle l'aérosol est obtenu est organique.

18. Procédé selon les revendications 15 à 17, **caractérisé en ce que** le composé de cérium est un composé organique.

19. Procédé selon les revendications 15 à 18, **caractérisé en ce que** l'aérosol est généré par une nébulisation aux ultrasons ou par au moins un pulvérisateur à plusieurs substances.

20. Procédé selon les revendications 15 à 19, **caractérisé en ce que** la valeur lambda est située 1,2 et 1,5.

21. Procédé selon les revendications 15 à 20, **caractérisé en ce que** la quantité d'air secondaire représente le double de la quantité d'air primaire.

22. Procédé selon les revendications 15 à 21, **caractérisé en ce qu'**une restriction est agencée dans la chambre de réaction.

23. Procédé selon les revendications 15 à 22, **caractérisé en ce que** le mélange réactionnel est refroidi, après avoir quitté la chambre de réaction, à des températures de 100 à 200°C.

24. Procédé selon les revendications 15 à 23, **caractérisé en ce que** la séparation du solide a lieu sur des filtres à des températures entre 100 et 200°C.

25. Procédé selon les revendications 15 à 24, **caractérisé en ce que** la température, dans l'espace de réaction, mesurée 0,5 m sous la flamme, est comprise entre 1000°C et 1400°C.

26. Utilisation de l'oxyde de cérium préparé par voie pyrogène selon les revendications 1 à 14 comme agent de polissage dans l'industrie électronique, pour la stabilisation thermique de caoutchouc de silicone et comme catalyseur.

27. Dispersion contenant la poudre d'oxyde de cérium selon les revendications 1 à 14.

28. Dispersion selon la revendication 27, **caractérisée en ce que** la poudre d'oxyde de cérium présente un diamètre moyen des agrégats d₅₀ dans la dispersion inférieur à 200 nm.

29. Dispersion selon les revendications 27 ou 28, **caractérisée en ce qu'**au moins 90% des agrégats dans la dispersion présentent un diamètre d'agrégat entre 200 et 300 nm.

30. Dispersion selon les revendications 27 à 29, **caractérisée en ce qu'**aucun agrégat dans la dispersion ne présente un diamètre d'agrégat supérieur à 500 nm.

31. Dispersion selon les revendications 27 à 30, **caractérisée en ce que** la teneur en oxyde de cérium est située entre 2 et 20% en poids.

32. Dispersion selon les revendications 27 à 31, **caractérisée en ce qu'**elle contient au moins un dispersant.

33. Dispersion selon la revendication 32, **caractérisée en ce que** le dispersant englobe le groupe des polymères organiques solubles dans l'eau, des substances tensioactives anioniques, solubles dans l'eau, des substances tensioactives non ioniques solubles dans l'eau et/ou des amines solubles dans l'eau.

34. Dispersion selon les revendications 27 à 33, **caractérisée en ce que** la proportion de dispersant est située entre 0,1 et 50% en poids, par rapport à l'oxyde de cérium.

35. Dispersion selon les revendications 27 à 34, **caractérisée en ce qu'**elle présente un pH alcalin.

36. Procédé pour la préparation de la dispersion selon les revendications 27 à 35, **caractérisé en ce que** la poudre d'oxyde de cérium est prédispersée dans un milieu liquide, de préférence aqueux puis y est dispersée, des dispersants et des substances régulant le pH étant le cas échéant disposés au préalable dans le milieu liquide, avant la prédispersion, ou ajoutés pendant la dispersion.

37. Utilisation de la dispersion selon les revendications 27 à 35 pour le polissage de couches oxydes et métalliques.
